# EUROPEAN PATENT APPLICATION

(11) **EP 4 498 612 A1**
(43) Date of publication of application: **29.01.2025**
(21) Application number: 24184955.3
(22) Date of filing: 27.06.2024
(51) Int. Cl.: H04B 7/04, H01Q 1/00, H04B 7/15

(54) **INTERNAL RADIO WAVE TRANSMISSION SYSTEM OF BUILDING**

(30) Priority: 27.07.2023 US 202363515995 P
(71) Applicant: Far Eastone Telecommunications Co., Ltd., Taipei City 10602 (TW)
(72) Inventor: LU, Tzuu-Yaw, 10602 Taipei City, Taiwan (TW); RAO, Herman Chunghwa, 10602 Taipei City, Taiwan (TW); KUO, Chun-Chieh, 10602 Taipei City, Taiwan (TW); CHIANG, Hua-Pei, 10602 Taipei City, Taiwan (TW); JANG, Chyi-Dar, 10602 Taipei City, Taiwan (TW); WANG, Tsung-Jen, 10602 Taipei City, Taiwan (TW); LIN, Chi-Hung, 10602 Taipei City, Taiwan (TW); HWANG, Wei-Di, 10602 Taipei City, Taiwan (TW); YEN, Fang-Chi, 10602 Taipei City, Taiwan (TW); HOU, Chien-Li, 10602 Taipei City, Taiwan (TW)
(74) Representative: Balder IP Law, S.L.

(57) **Abstract**

An internal radio wave transmission system of building includes a base layer (LB) and a transmission layer (LT), with a radio wave transmission channel (C1) between the two layers. The radio wave transmission system in a building includes a signal transceiver device (BS), a first reflective plate (10) and a second reflective plate (20). The signal transceiver device (BS) is connected with a telecommunication room (R), and the signal transceiver device (BS) emits and receives radio wave signals (S). The first reflective plate (10) is disposed in the channel and corresponds to positions of the base layer (LB) and the signal transceiver device (BS) to receive and guide the radio wave signals (S). The second reflective plate (20) is disposed in the channel and corresponds to a position of the transmission layer (LT) to receive and guide the radio wave signals (S) to terminal equipment located in the transmission layer (LT). The invention ensures the effective transmission of the radio wave signals (S) inside the building.

## Description

### BACKGROUND OF THE INVENTION

### CROSS-REFERENCE TO RELATED APPLICATION

This application claims the priority benefits of provisional application No. 63/515,995, filed on July 27, 2023. The entirety of the above-mentioned application is hereby incorporated by reference herein and made a part of this specification.

### Field of the Invention

The invention relates to the field of radio wave transmission, in particular, to an internal radio wave transmission system of building.

### Description of the Prior Art

Generally, when building indoor communication networks, we often encounter scenarios where there are multiple floors or walls blocking the network. One practice is to deploy in a wired manner, such as using fiber optics or Ethernet cables, etc. to pass through the narrow gaps between floors through physical lines to penetrate multiple floors or walls. However, this practice requires a lot of labor and construction costs. Once the layout is adjusted, the network deployment plan must be changed accordingly, resulting in repeated revisions and cost losses. The other practice is to choose wireless communication transmission on each floor, using radio waves to penetrate walls or floors. Although no additional wire construction is required during deployment, signal loss often occurs when there are multiple floors or wall barriers, causing users to experience a drop in transmission rate, which does not meet their needs and expectations.

Therefore, in view of the above-mentioned problems of the prior art, the invention further proposes an internal radio wave transmission system of building to solve the problems caused by the prior art.

### SUMMARY OF THE INVENTION

In view of the above problems, one objective of the invention is to provide an indoor communication network and radio wave transmission system that can be used for transmission between multi-floor floors and walls, which enables fast and convenient radio wave transmission inside the building without consuming manpower and construction costs during building.

The other objective of the invention is to overcome the problem of signal losses in radio wave transmission caused by prior art, which may increase the signal strength of radio wave transmission and effectively transmit radio wave signals to each floor and target coverage areas.

In order to achieve the above objectives, the invention provides an internal radio wave transmission system of building; the building includes a base layer and a transmission layer, and a radio wave transmission channel being disposed through between the base layer and the transmission layer; the internal radio wave transmission system of building; the building includes a signal transceiver device, a first reflective plate and a second reflective plate, and the signal transceiver device is connected with a telecommunication room and emits and receives radio wave signals; the first reflective plate is disposed in the radio wave transmission channel and corresponds to positions of the base layer and the signal transceiver device; the second reflective plate is disposed in the radio wave transmission channel and corresponds to a position of the transmission layer. The first reflective plate is used to receive a radio wave signal emitted by the signal transceiver device, and guide the radio wave signal emitted by the signal transceiver device to the second reflective plate; or the first reflective plate is used to receive the radio wave signal emitted by the second reflective plate, and the first reflective plate is used to guide the radio wave signal emitted by the second reflective plate to the signal transceiver device. The second reflective plate is used to receive the radio wave signal emitted by the first reflective plate, and guide the radio wave signal emitted by the first reflective plate to terminal equipment located in the transmission layer; or the second reflective plate is used to receive the radio wave signal emitted by the terminal equipment, and guide the radio wave signal emitted by the terminal equipment to the first reflective plate.

According to the above objective, the invention further includes an internal radio wave transmission system of building, which includes a base layer and a plurality of transmission layers, a radio wave transmission channel being disposed through between the base layer and each of the transmission layers. The signal transceiver device is connected with a telecommunication room and emits and receives radio wave signals; the first reflective plate is disposed in the radio wave transmission channel and corresponds to positions of the base layer and the signal transceiver device; the plurality of second reflective plates are disposed in the radio wave transmission channel and corresponds to a position of each of the transmission layers respectively. The first reflective plate is used to receive a radio wave signal emitted by the signal transceiver device, and guide the radio wave signal emitted by the signal transceiver device to each of the adjacent second reflective plates; or the first reflective plate is used to receive the radio wave signal emitted by each of the adjacent second reflective plates, and the first reflective plate is used to guide the radio wave signal emitted by each of the adjacent second reflective plates to the signal transceiver device. Each of the second reflective plates is used to receive the radio wave signal emitted by the adjacent first reflective plate, and guide the radio wave signal emitted by the first reflective plate to terminal equipment located in each of the corresponding transmission layers; or each of the second reflective plates is used to receive the radio wave signal emitted by the terminal equipment of each of the transmission layers, and guide the radio wave signal emitted by the terminal equipment to the first reflective plate.

According to the above, the internal radio wave transmission system of building of the invention integrates the advantages of wired and wireless transmission, uses the free space between building pipes (such as gaps or channels) as the transmission medium for radio waves (Over the air), utilizes the radio wave characteristics of high-frequency narrow beam signals to penetrate extremely small gaps between pipes, and uses optical and radio principles (such as mirror reflection and refraction of reflective plates) to assist in achieving signal direction guidance in horizontal and vertical (different floors) directions for the introduction and extraction of signals on each floor, so as to effectively reduce labor and construction costs, as well as the huge energy loss of radio waves penetrating obstacles.

### BRIEF DESCRIPTION OF THE DRAWINGS

Fig. 1 is a diagram of a first embodiment of an internal radio wave transmission system of building according to the disclosure;
Fig. 2 is a diagram of a second embodiment of the internal radio wave transmission system of building according to the disclosure;
Fig. 3 is a diagram of a third embodiment of the internal radio wave transmission system of building according to the disclosure;
Fig. 4 is a diagram of a fourth embodiment of the internal radio wave transmission system of building according to the disclosure;
Fig. 5 is a diagram of a fifth embodiment of the internal radio wave transmission system of building according to the disclosure.

### DESCRIPTION OF THE PREFERRED EMBODIMENTS

Embodiments of the invention will be further explained with the help of the related drawings below. Wherever possible, in the drawings and the description, the same reference numbers refer to the same or similar components. In the drawings, shapes and thicknesses may be exaggerated for simplicity and convenience. It should be understood that the elements not particularly shown in the drawings or described in the specification have forms known to those skilled in the art. Those skilled in the art can make various changes and modifications based on the content of the invention.

In the invention, the terms 'first', 'second', etc. are used to describe various elements, components, regions, layers, and/or sections. However, it should be understood that these elements, components, regions, layers, and/or sections should not be limited by these terms. These terms are only used to distinguish one element, component, region, layer, and/or section from another element, component, region, layer, and/or section. It does not imply or represent any previous serial number of the component, nor does it represent the order of arrangement of one component with another component, or the order of the manufacturing method. Therefore, without departing from the scope of the specific embodiments of the invention, a first element, component, region, layer or section discussed below may also be termed a second element, component, region, layer or section.

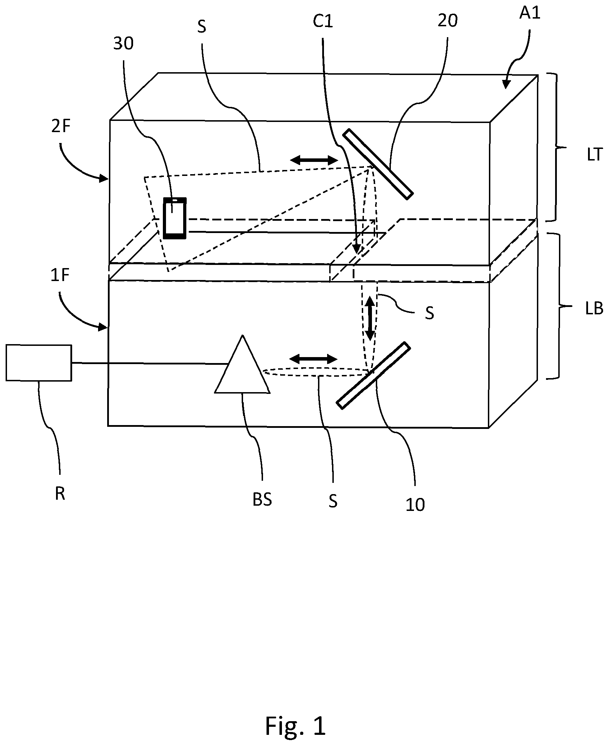

With reference to Fig. 1, an internal radio wave transmission system of building of the embodiment is suitable for buildings with multiple floors. The building A1 includes a base layer LB and a transmission layer LT. A radio wave transmission channel C1 is disposed through between the base layer LB and the transmission layer LT. The radio wave transmission channel C1 in Fig. 1 is only an example. It can be a pipe or a gap between floors or walls, but is not limited thereto. The internal radio wave transmission system of building includes a signal transceiver device BS, a first reflective plate 10 and a second reflective plate 20. The signal transceiver device BS is connected with a telecommunication room R, and emits and receives radio wave signals S. The signal transceiver device BS is a wireless base station. The first reflective plate 10 is disposed in the radio wave transmission channel C1, and corresponds to positions of the base layer LB and the signal transceiver device BS. The second reflective plate 20 is disposed in the radio wave transmission channel C1, and corresponds to a position of the transmission layer LT. The first reflective plate 10 and the second reflective plate 20 are preferably a reconfigurable intelligent surface made with reconfigurable intelligent surface technology to accurately guide or reflect signals to a specified direction.

In the embodiment, the signal transceiver device BS is disposed on the base layer LB. For example, the building A1 has a first floor 1F and a second floor 2F, wherein the first floor 1F is defined as the base layer LB, and the second floor 2F is defined as the transmission layer LT. The above definition is not used to limit the invention to only two floors, but to clearly understand the spirit and technical characteristics of the invention. Those skilled in the art can easily make modifications based on the disclosure of the invention. The first reflective plate 10 is disposed on the base layer LB to receive the radio wave signals S emitted by the signal transceiver device BS also disposed on the base layer LB, and to guide the radio wave signals S emitted by the signal transceiver device BS to the second reflective plate 20 located on the transmission layer LT; the first reflective plate 10 may also be used to receive the radio wave signals S emitted by the second reflective plate 20 located on the transmission layer LT, and the first reflective plate 10 is used to guide the radio wave signals S emitted by the second reflective plate 20 to the signal transceiver device BS. The second reflective plate 20 is disposed on the transmission layer LT to receive the radio wave signals S emitted by the first reflective plate 10 disposed on the base layer LB, and to guide the radio wave signals S emitted by the first reflective plate 10 to terminal equipment 30 located in the transmission layer LT; the second reflective plate 20 may also be used to receive the radio wave signals S emitted by the terminal equipment 30, and to guide the radio wave signals S emitted by the terminal equipment 30 to the first reflective plate 10. The terminal equipment 30 may be, but is not limited to, a mobile device, a smart phone, a notebook computer, a tablet computer, etc. The terminal equipment 30 shown in Fig. 1 is only an example and illustration, and is not used to limit its ontological structure.

Further, how to deploy the internal radio wave transmission system of building will be introduced. Firstly, according to a horizontal width and a vertical height of the preset radio wave transmission channel C1 in the building A1, through a radio wave simulator (such as RF Simulator, a device that simulates the transmission and reception of RF radio frequency signals), wireless signal transmission and reception simulation is performed at each possible signal guidance and turning point for signals. Next, each of positions that can be deployed to guide and reflect the signals is defined as a reflection point, a position of an emission source is confirmed and defined as a starting point, and a final covered area is confirmed and defined as an end point. Then, the signal transceiver device BS (i.e., an emission source of the wireless base station) is set up at the starting point, and a reflection test is performed from a proximal end to each of the positions of the reflection points to conduct a first-phase reflection test for verifying whether wireless signals can be guided through the turning and guidance of each of the reflective plates to a next reflection point or to the end point while finding a best reflection angle for the reflective plate; after the verification is successful, a next-phase reflection is continued until the signals reach the end point. Finally, after the test is completed, the reflective plates are installed at appropriate positions of the reflection points and an optimal reflection angle, and whether to install a signal amplification module or a signal extension module based on the scene is determined, or far-field reflective plates are directly use to guide the wireless signals into the covered area.

In the embodiment, the radio wave transmission channel C1 is represented by a narrow channel; however, in actual implementation, the radio wave transmission channel C1 may be represented by using tools or parts to penetrate the floor, or as various free space channels such as pipes and slits; therefore, the above examples and the radio wave transmission channel C1 in the figure are illustrative and not limiting, and those skilled in the art may set free space as the radio wave transmission medium, which may also have the same effect.

Then, the characteristics of the radio wave signal S of the invention will be explained. The radio wave signal S is preferably a high-frequency narrow-beam signal (Narrow-Beam & High-Band Wireless Signal). The so-called high-frequency narrow-beam signal means that under the same conditions, the characteristics of inverse proportion (i.e., the higher the wave frequency, the narrower the beam width) are exploited to increase the frequency of the radio wave signal S emitted by the signal transceiver device BS to a higher frequency and further to narrow the width of the signal beam so that the high-frequency narrow beam signal can pass through the narrow channels (or slits) inside the building A1 to effectively transmit the radio signal S and reduce the loss. Therefore, there is no need to dig additional transmission channels inside the building A1, and radio wave signals can be efficiently transmitted through the small slits inside the building A1, thereby reducing the cost in the deployment of communication networks inside the building A1.

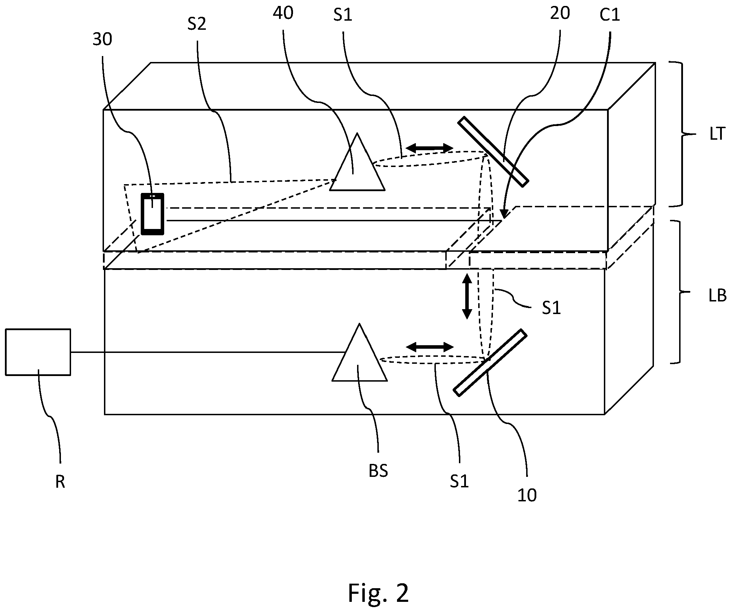

With reference to Fig. 2, the embodiment differs from the first embodiment in that the internal radio wave transmission system of building further includes a signal processing device 40, wherein the signal processing device 40 is disposed on the transmission layer LT and corresponds to a position of the second reflective plate 20; the signal processing device 40 is used to process the radio wave signal S 1 emitted by the second reflective plate 20. The signal processing device 40 may include a signal amplification module or a signal extension module. The signal amplification module or the signal extension module may be located between the terminal equipment 30 and the second reflective plate 20, the signal amplification module is used to receive and amplify the radio wave signal S1 emitted by the second reflective plate 20, and the signal extension module is used to receive and extend the radio wave signal S1 emitted by the second reflective plate 20. As a result, the radio wave signal S1 emitted by the second reflective plate 20 is processed by the signal amplification module or the signal extension module, and the processed radio wave signal S2 is then transmitted to the terminal equipment 30. For example, the radio wave signal S2 processed by the signal amplification module of the signal processing device 40 may increase the amplitude of the signal, which is beneficial to the signal transmission process without weakening when applied in a wide space while reducing the noise of the radio wave signal S2 and provide a more accurate radio wave signal; the radio wave signal S2 may be extended to a longer distance through the signal extension module of the signal processing device 40, overcoming the limitations and space impact of conventional cables and wire layouts while avoiding signal interference, which not only saves space but also saves electricity, so that this solution may be used in various environments.

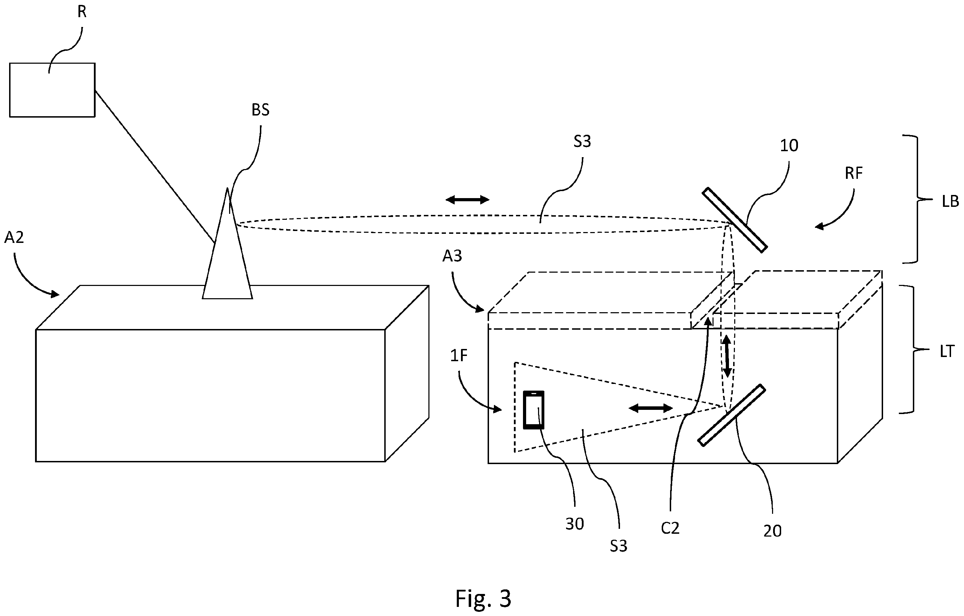

With reference to Fig. 3, the embodiment differs from the first embodiment in the position where the signal transceiver device BS is disposed. In the embodiment, the signal transceiver device BS is disposed outside the building A2 (for example, the top floor or roof of the building A2) and corresponds to the position of the base layer LB. As shown in Fig. 3, the signal transceiver device BS is disposed in the building A2, and a building A3 has a first floor 1F and a top floor RF, wherein the top floor RF is defined as the base layer LB, and the first floor 1F is defined as the transmission layer LT. The above definition is not intended to limit the number of floors in the invention, but to clearly understand the spirit and technical characteristics of the invention. Those skilled in the art can easily make modifications based on the disclosure of the invention.

The first reflective plate 10 is located on the top floor RF, corresponding to the position of the base floor LB, and is also located in the radio wave transmission channel C2. The first reflective plate 10 is used to receive the radio wave signal S3 emitted by the signal transceiver device BS, and guide the radio wave signal S3 emitted by the signal transceiver device BS to the second reflective plate 20 located on the first floor 1F. The first reflective plate 10 may also be used to receive the radio wave signal S3 emitted by the second reflective plate 20, and the first reflective plate 10 is used to guide the radio wave signal S3 emitted by the second reflective plate 20 to the signal transceiver device BS outside the building A2. The second reflective plate 20 is located on the first floor 1F, corresponding to the position of the transmission layer LT, and is also disposed in the radio wave transmission channel C2. The second reflective plate 20 is used to receive the radio wave signal S3 emitted by the first reflective plate 10 and guide the radio wave signal S3 emitted by the first reflective plate 10 to the terminal equipment 30 located in the transmission layer LT. The second reflective plate 20 may also be used to receive the radio wave signal S3 emitted by the terminal equipment 30, and to guide the radio wave signal S3 emitted by the terminal equipment 30 to the first reflective plate 10. The appearance of the radio wave transmission channel C2 in Fig. 3 is only for illustration. The radio wave transmission channel C2 may be a free space such as a pipe or a slit penetrating the floor. Those skilled in the art can set space as the transmission medium of radio waves by themselves, which will not be described again here.

Therefore, the internal radio wave transmission system of building may overcome the limitations of traditional network deployment inside and outside the building; it may not only overcome the problems of limited transmission distance and difficult installation between adjacent buildings, but also improve the transmission quality and efficiency, thereby effectively reducing the construction cost.

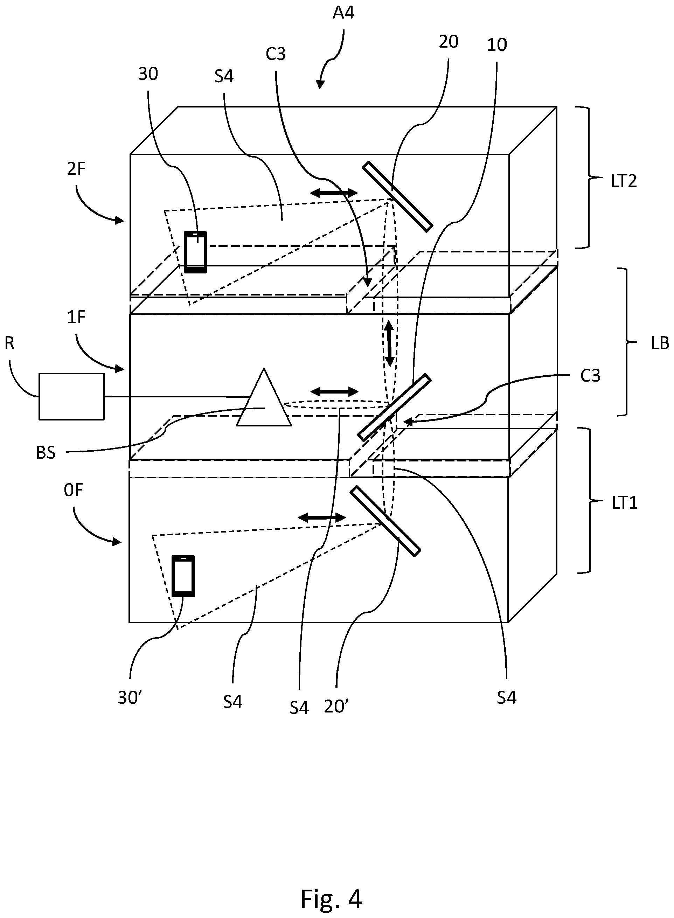

With reference to Fig. 4, the embodiment differs from the first embodiment in that there are a plurality of transmission layers; for example, in the embodiment, a building A4 includes a base layer LB, a first transmission layer LT1 and a second transmission layer LT2. The building A4 has an underground floor 0F, a first floor 1F and a second floor 2F, wherein the first floor 1F may be defined as the base layer LB, the underground floor 0F may be defined as the first transmission layer LT1 as below, and the second floor 2F may be defined as the second transmission layer LT2 as below. The above definition is not used to limit the number of floors of the invention, but to clearly understand the spirit and technical characteristics of the invention. Those skilled in the art can easily make modifications based on the disclosure of the invention.

Connected radio wave transmission channels C3 are disposed between the base layer LB, the first transmission layer LT1 and the second transmission layer LT2 respectively. The radio wave transmission channels C3 may be vertically connected or curvedly connected with each other. In Fig. 4 , only the slits in the floor are used as illustrations, but this is not a limitation and will not be described again. The signal transceiver device BS is disposed on the base layer LB (i.e., in the first floor 1F), and connected with a telecommunication room R and emits and receives a radio wave signal S4; the first reflective plate 10 is disposed in the radio wave transmission channel C3 and corresponds to positions of the base layer LB and the signal transceiver device BS; a plurality of second reflective plates 20 and 20' are disposed in the radio wave transmission channel C3 and corresponds to a position of each of the transmission layers respectively. That is to say, the second reflective plate 20 is located at a position corresponding to the second transmission layer LT2, and the second reflective plate 20' is located at a position corresponding to the first transmission layer LT1. The first reflective plate 10 is used to receive the radio wave signal S4 emitted by the signal transceiver device BS, and guide the radio wave signal S4 emitted by the signal transceiver device BS to each of the adjacent second reflective plates 20 and 20'; or the first reflective plate 10 is used to receive the radio wave signal S4 emitted by each of the adjacent second reflective plates 20 and 20', and the first reflective plate 10 is used to guide the radio wave signal S4 emitted by each of the adjacent second reflective plates 20 and 20' to the signal transceiver device BS. Each of the second reflective plates 20 and 20' is used to receive the radio wave signal S4 emitted by the adjacent first reflective plate 10, and guide the radio wave signal S4 emitted by the first reflective plate 10 to terminal equipment 30 and 30' located in each of the corresponding transmission layers; or each of the second reflective plates 20 and 20' is used to receive the radio wave signal S4 emitted by the terminal equipment 30 and 30' of each of the transmission layers, and guide the radio wave signal S4 emitted by the terminal equipment 30 and 30' to the first reflective plate 10.

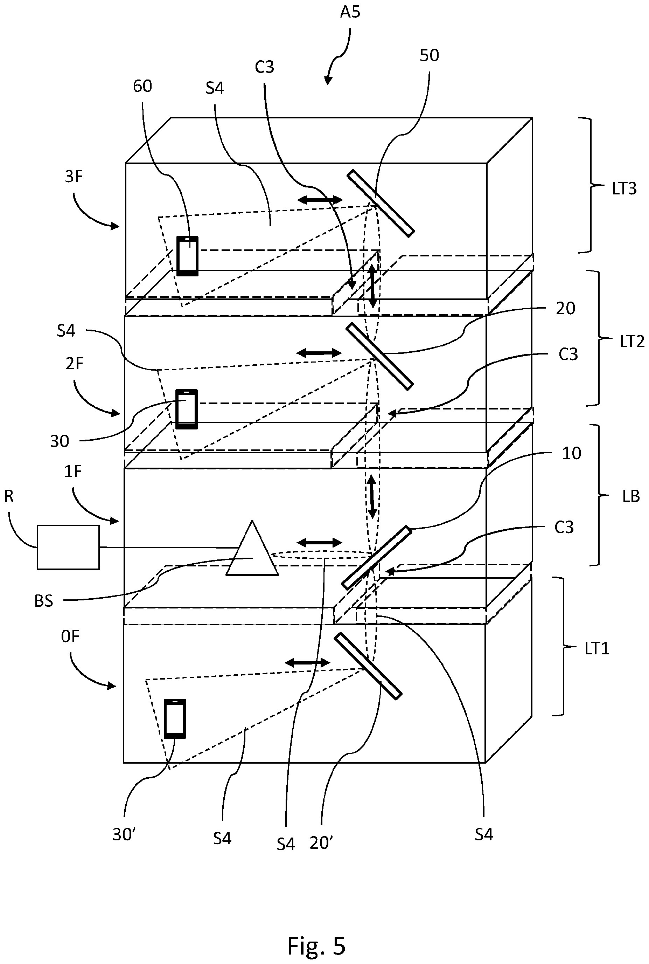

With reference to Fig. 5, the embodiment differs from the first embodiment in that the transmission layer includes at least one second transmission layer LT3 and a third reflective plate 50. In the embodiment, a building A5 includes a base layer LB, a first transmission layer LT1, a second transmission layer LT2 and a third transmission layer LT3. The building A5 has an underground floor 0F, a first floor 1F, a second floor 2F and a third floor 3F. Those skilled in the art may arrange each floor as the base layer or the transmission layer by themselves; for example, the first floor is the base layer LB, the underground floor 0F is the first transmission layer LT1, the second floor 2F is the second transmission layer LT2, and the third floor 3F is the third transmission layer LT3. Since the above solution has been described in the foregoing embodiments, it will not be described again here. The third reflective plate 50 is located at a position corresponding to the third transmission layer LT3, and the third reflective plate 50 preferably corresponds to positions of the second reflection plates 20, 20' and is disposed on an adjacent floor; that is to say, the third reflective plate 50 may be disposed on the third floor 3F, or may be disposed on a floor below the underground floor 0F, but is not limited thereto.

For example, the situation that the signal transceiver device BS emits the radio wave signal S4 is taken as an example. Firstly, the signal transceiver device BS and the telecommunication room R transmit to each other, and the telecommunication room R emits telecommunication signals and transmits them to the signal transceiver device BS; after the signal transceiver device BS receives the telecommunication signal, the signal transceiver device BS converts the telecommunication signal into the radio wave signal and emits the radio wave signal. After receiving the radio wave signal S4 emitted by the signal transceiver device BS, the first reflective plate 10 guides the radio wave signal S4 to each of the adjacent second reflective plates 20 and 20', and the second reflective plates 20 and 20' receive the radio wave signal S4 emitted by the adjacent first reflective plate 10 and guide the radio wave signal S4 to the terminal equipment 30 and 30' located in each of the corresponding transmission layers. The second reflective plates 20 and 20' receive the radio wave signal S4 emitted by the adjacent first reflective plate 10 while refracting and guiding the radio wave signal S4 to the adjacent third reflective plate 50, and the third reflective plate 50 receives the radio wave signal S4 emitted by the adjacent second reflective plate 20 and guides the radio wave signal S4 to the terminal equipment 60 located in the third transmission layer LT3.

A situation that the terminal equipment 60 emits the radio wave signal S4 is taken as an example. The radio wave signal S4 emitted by the terminal equipment 60 of the third transmission layer is received, and the radio wave signal S4 emitted by the terminal equipment 60 is guided to the second reflective plate 20; the second reflective plate 20 receives the radio wave signal S4 emitted by the terminal equipment 60 of the third transmission layer LT3, and refracts and guides the radio wave signal S4 to the adjacent first reflective plate 10, while the second reflective plate 20 receiving and guiding the radio wave signal S4 emitted by the terminal equipment 30 of the second transmission layer LT2 to the first reflective plate 10. The first reflective plate 10 receives the radio wave signal S4 reflected by the adjacent second reflective plate 20, and the first reflective plate 10 guides the radio wave signal S4 emitted by the adjacent second reflective plate 20 to the signal transceiver device BS. After the signal transceiver device BS receives the radio wave signal S4, the signal transceiver device BS converts the radio wave signal S4 into the telecommunication signals and emits them to the telecommunication room R.

In summary, the internal radio wave transmission system of building of the invention may effectively reduce the construction cost of network deployment, while improving the deployment efficiency, overcoming the conventional problem of energy loss of radio waves penetrating obstacles (compartments or floors) and being used in multi-floor buildings, radio wave signal transmission in adjacent buildings, or indoor environments with multiple partitions (walls), so as to accurately and reliably transmit wireless signals to the target covered area.

The above description is only to illustrate the preferred implementation mode of the invention, and is not intended to limit the scope of implementation. All simple replacements and equivalent changes made according to the patent scope of the invention and the content of the patent specification all belong to the scope of the patent application of the invention.

## Claims

1. An internal radio wave transmission system of building, applied to a building (A1) which comprises a base layer (LB) and a transmission layer (LT), a radio wave transmission channel (C1) being disposed through between the base layer (LB) and the transmission layer (LT), the internal radio wave transmission system of building comprising:
a signal transceiver device (BS), connected with a telecommunication room (R) and emitting and receiving a radio wave signal (S);
a first reflective plate (10), disposed in the radio wave transmission channel (C1) and corresponding to positions of the base layer (LB) and the signal transceiver device (BS); and
a second reflective plate (20), disposed in the radio wave transmission channel (C1) and corresponding to a position of the transmission layer (LT); wherein
the first reflective plate (10) is used to receive the radio wave signal (S) emitted by the signal transceiver device (BS), and guide the radio wave signal (S) emitted by the signal transceiver device (BS) to the second reflective plate (20); or the first reflective plate (10) is used to receive the radio wave signal (S) emitted by the second reflective plate (20), and the first reflective plate (10) is used to guide the radio wave signal (S) emitted by the second reflective plate (20) to the signal transceiver device (BS);
the second reflective plate (20) is used to receive the radio wave signal (S) emitted by the first reflective plate (10), and guide the radio wave signal (S) emitted by the first reflective plate (10) to a terminal equipment located in the transmission layer (LT); or the second reflective plate (20) is used to receive the radio wave signal (S) emitted by the terminal equipment, and guide the radio wave signal (S) emitted by the terminal equipment to the first reflective plate (10).

2. The internal radio wave transmission system of building according to claim 1, wherein the signal transceiver device (BS) is disposed on the base layer (LB).

3. The internal radio wave transmission system of building according to claim 1, wherein the signal transceiver device (BS) is disposed outside the building and corresponds to the position of the base layer (LB).

4. The internal radio wave transmission system of building according to claim 1, further including a signal processing device (40), wherein the signal processing device (40) is disposed on the transmission layer (LT) and corresponds to a position of the second reflective plate (20); the signal processing device (40) is used to process the radio wave signal (S) emitted by the second reflective plate (20).

5. The internal radio wave transmission system of building according to claim 4, wherein the signal processing device (40) includes a signal amplification module located between the terminal equipment and the second reflective plate (20), and the signal amplification module is used to receive and amplify the radio wave signal (S) emitted by the second reflective plate (20) and guide the radio wave signal (S) to the terminal equipment.

6. The internal radio wave transmission system of building according to claim 4, wherein the signal processing device (40) includes a signal extension module located between the terminal equipment and the second reflective plate (20), and the signal extension module is used to receive and extend the radio wave signal (S) emitted by the second reflective plate (20) and guide the radio wave signal (S) to the terminal equipment.

7. An internal radio wave transmission system of building, applied to a building which includes a base layer (LB) and a plurality of transmission layers (LT), a radio wave transmission channel (C1) being disposed through between the base layer (LB) and the plurality of transmission layers (LT), the internal radio wave transmission system of building including:
a signal transceiver device (BS), connected with a telecommunication room and emitting and receiving a radio wave signal (S);
a first reflective plate (10), disposed in the radio wave transmission channel (C1) and corresponding to positions of the base layer (LB) and the signal transceiver device (BS); and
a plurality of second reflective plates (20), disposed in the radio wave transmission channel (C1) and corresponding to a position of each of the transmission layers (LT) respectively; wherein
the first reflective plate (10) is used to receive the radio wave signal (S) emitted by the signal transceiver device (BS), and guide the radio wave signal (S) emitted by the signal transceiver device (BS) to each of the second reflective plates (20) that are adjacent; or the first reflective plate (10) is used to receive the radio wave signal (S) emitted by each of the second reflective plates (20) that are adjacent, and the first reflective plate (10) is used to guide the radio wave signal (S) emitted by each of the second reflective plates (20) that are adjacent to the signal transceiver device (BS);
each of the second reflective plates (20) is used to receive the radio wave signal (S) emitted by the first reflective plate (10) that are adjacent, and guide the radio wave signal (S) emitted by the first reflective plate (10) to a terminal equipment located in each of the corresponding transmission layers (LT); or each of the second reflective plates (20) is used to receive the radio wave signal (S) emitted by the terminal equipment of each of the transmission layers (LT), and guide the radio wave signal (S) emitted by the terminal equipment to the first reflective plate (10).

8. The internal radio wave transmission system of building according to claim 7, wherein the signal transceiver device (BS) is disposed on the base layer (LB).

9. The internal radio wave transmission system of building according to claim 7, wherein the signal transceiver device (BS) is disposed outside the building and corresponds to the position of the base layer (LB).

10. The internal radio wave transmission system of building according to claim 7, further including a plurality of signal processing devices (40), wherein the plurality of signal processing devices (40) are disposed on each of the transmission layers (LT) and corresponds to a position of each of the second reflective plates (20) respectively; the plurality of signal processing devices (40) are used to process the radio wave signal (S) emitted by each of the second reflective plates (20).

11. The internal radio wave transmission system of building according to claim 10, wherein each of the signal processing devices (40) includes a signal amplification module, each of the signal amplification modules is located between each of the terminal equipment and each of the second reflective plates (20), and each of the signal amplification modules is used to receive and amplify the radio wave signal (S) emitted by each of the second reflective plates (20) and guide the radio wave signal (S) to each of the terminal equipment.

12. The internal radio wave transmission system of building according to claim 10, wherein each of the signal processing devices (40) includes a signal extension module, each of the signal extension modules is located between each of the terminal equipment and each of the second reflective plates (20), and each of the signal extension modules is used to receive and extend the radio wave signal (S) emitted by each of the second reflective plates (20) and guide the radio wave signal (S) to each of the terminal equipment.
